# EUROPÄISCHE PATENTANMELDUNG

(11) **EP 1 014 003 A2**
(43) Veröffentlichungstag der Anmeldung: **28.06.2000**
(21) Anmeldenummer: 99124761.0
(22) Anmeldetag: 13.12.1999
(51) Int. Cl.: F24C 15/10, F24C 7/08

(54) **Haushaltgerät**

(30) Priorität: 22.12.1998 DE 19859570
(71) Anmelder: BSH Bosch und Siemens Hausgeräte GmbH, 81669 München (DE)
(72) Erfinder: Weiss, Dieter, 77815 Bühl (DE)

(57) **Zusammenfassung**

Die Erfindung betrifft ein Haushaltgerät mit einer Vorrichtung (10) zur Erzeugung von Mikroschwingungen eines Gefäßes (8) relativ zu einer darin befindlichen Speise zur Vermeidung, daß die Speise anbrennt.

## Beschreibung

Die Erfindung betrifft ein Haushaltgerät gemäß dem Oberbegriff von Anspruch 1.

Das Haushaltgerät ist in Kombination mit Elektroherden und Gasherden sowie anderen Arten von Gaskochstellen und Elektrokochstellen verwendbar, wie sie allgemein bekannt sind.

Auf Gas- und Elektrokochstellen werden die Speisen üblicherweise in einem Topf, einer Pfanne oder einem ähnlichen Gefäß erhitzt. Je nach Gefäßart und Leistung der Kochstelle wird die Speise mehr oder weniger schnell erhitzt. Wenn die Speise nicht durch Umrühren in Bewegung gehalten wird, dann kann sie örtlich sehr schnell überhitzt werden und sie brennt häufig auf dem Boden des Gefäßes an.

Zur Vermeidung dieses Nachteils ist es bekannt, die Gefäßinnenflächen mit einer die Haftung der Speisen reduzierenden Beschichtung zu versehen. Bekannt ist selbstverständlich auch ein manuelles Rühren der Speisen im Topf zur Vermeidung, daß die Speise im Topf anbrennt. Ferner gibt es kombinierte Koch- und Mix-Gefäße, in welchen ein Anhaften und Anbrennen von Speisen durch ein rotierendes Rührwerk verhindert wird.

Durch die Erfindung soll die Aufgabe gelöst werden, ein örtliches Uberhitzen von Speisen, insbesondere Gargut (Gemüse, Fleisch und dergleichen), in einem Gefäß und ein Anhaften und Anbrennen der Speise am Gefäß zu verhindern, ohne daß dafür im Gefäß soviel Platz benötigt wird, wie für ein Rührwerk, wobei die Erfindung auch für solche Speisen verwendbar sein soll, für welche kein Rührwerk verwendet werden kann, beispielsweise für Speisen, welche durch einen Rührvorgang ihre Konsistenz verändern würden oder für Speisen, für welche kein Platz mehr für ein Rührwerk im Gefäß verbleibt, und für Speisen, welche "massiv" sind und deshalb nicht umrührbar sind, beispielsweise Fleisch und große Gemüsesorten.

Diese Aufgabe wird gemäß der Erfindung durch die kennzeichnenden Merkmale von Anspruch 1 gelöst.

Ein Grundgedanke der Erfindung ist es, das Gefäß und/oder die Speise (Gargut) während des Erwärmens und/oder des Warmhaltens relativ zur Speise bzw. relativ zum Topf nicht durch Bewegungen über große Strecken, sondern durch hochfrequente kleine Bewegungen zu bewegen. Hierfür sind gemäß der Erfindung Mikrobewegungen des Gefäßes und/oder der Speise vorgesehen. "Mikrobewegungen" bedeuten hierbei sehr kleine Relativbewegungen zwischen dem Gefäß und der Speise (Gargut), vorzugsweise Bewegungen mit einer Bewegungsstrecke von maximal 5mm, vorzugsweise jedoch maximal 1mm oder weniger, und noch bevorzugter im Bereich von Mikrometern. Die Mikrobewegungen sind vorzugsweise Schwingungen, welche regelmäßig oder unregelmäßig, in gleicher Richtung oder in verschiedenen Richtungen wechselnd sein können. Ferner sind auch andere regelmäßige oder unregelmäßige Bewegungsabläufe möglich. Die Bewegungen können vorzugsweise ausgelöst werden durch mechanische Bewegungen des Gefäßes und/oder der Speise, und/oder durch elektrische Effekte und/oder durch Schallwellen, insbesondere Ultraschallwellen. Der Frequenzbereich der Schallwellen liegt vorzugsweise in dem für Menschen nicht hörbaren Bereich unter 50Hz oder über 20 kHz, vorzugsweise über 30 kHz.

Durch die Erfindung ergeben sich folgende Vorteile:
Die Vorrichtung zur Erzeugung der relativen Mikrobewegungen zwischen dem Gefäß und der darin befindlichen Speise benötigt je nach technischer Ausführungsform entweder überhaupt keinen oder nur wenig Raum in dem betreffenden Gefäß. Die Vorrichtung benötigt nur wenig elektrische Energie und wenig Bauraum und ist preiswert herstellbar. Durch die Mikrobewegungen haftet die Speise (Gargut) nicht so leicht an dem Gefäß und brennt damit auch nicht so leicht an dem Gefäß an. Beim Auftauen von gefrorenem Gargut kann sich zwischen Gargut und Gefäßboden ein Feuchtigkeitsfilm bilden, durch welchen das Anbrennen ebenfalls erschwert wird. Vorzugsweise wird das Gefäß zu den genannten Mikrobewegungen bzw. Schwingungen angeregt, mit welchen es sich dann relativ zu der in ihm enthaltenen Speise bewegt.

Weitere Merkmale der Erfindung sind in den Unteransprüchen enthalten.

Die Erfindung wird im folgenden mit Bezug auf die Zeichnungen anhand von bevorzugten Ausführungsformen als Beispiele beschrieben. In den Zeichnungen zeigen:
- Fig. 1: schematisch ein Haushaltgerät nach der Erfindung in Seitenansicht
- Fig. 2: schematisch eine Seitenansicht einer weiteren Ausführungsform eines Haushaltgerätes nach Erfindung,
- Fig. 3: schematisch eine Seitenansicht einer nochmals weiteren Ausführungsform eines Haushaltgerätes nach der Erfindung,
- Fig. 4: schematisch eine Seitenansicht einer weiteren Ausführungsform eines Haushaltgerätes nach der Erfindung.

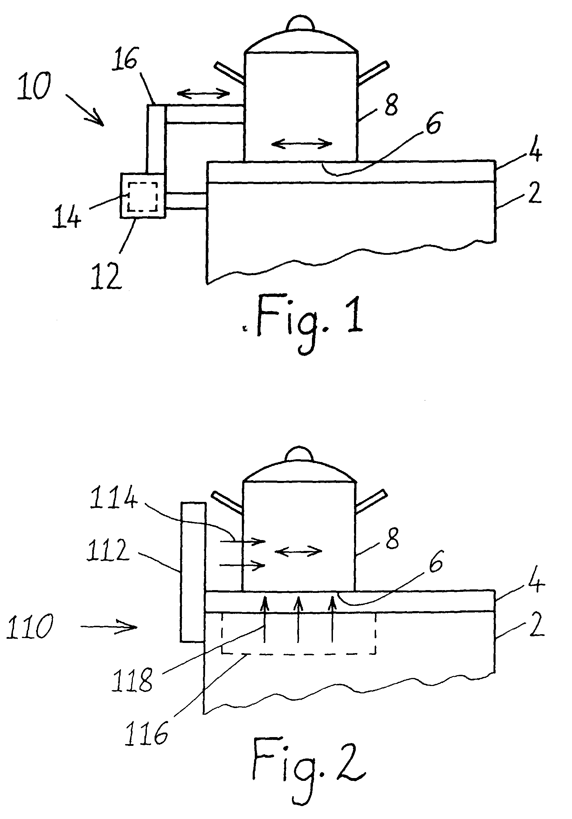

Fig.1 zeigt einen oberen Abschnitt eines Herdes (Gasherd oder Elektroherd) 2 mit einem Kochfeld 4, welcher eine Kochstelle 6 hat, auf welcher ein Gefäß 8 in Form eine Topfes steht.

Eine mechanische Schwingungsvorrichtung 10 hat einen am Herd 2 befestigten ortsfesten Teil 12, einen elektrischen Oszillator 14 und einen vom Oszillator 14 relativ zum ortsfesten Teil 12 in Schwingungen versetzbaren beweglichen Schwingungsteil 16, welcher mit dem Gefäß 8 verbunden ist und dadurch seine Schwingungen auf das Gefäß 8 überträgt.

Die Schwingungen können gleichmäßig oder ungleichmäßig, in gleichbleibender Richtung oder in verschiedene Richtungen wechselnd sein.

Die Größe der Bewegungen der Speise und des Gefäßes 8 relativ zueinander liegt vorzugsweise bei maximal 1mm oder kleiner, vorzugsweise im Bereich von Mikrometern.

Eine solche Relativbewegung zwischen dem Gefäß 8 und der in ihm enthaltenen Speise findet vorzugsweise mindestens einmal pro Sekunde statt.

Die Erfindung ist auf alle Speisen anwendbar, bei welchen bei Erhitzung die Gefahr eines Anhaftens oder Anbrennens an den Innenflächen des Gefäßes 8 besteht, also insbesondere bei sogenanntem Gargut (Fleisch, Gemüse, usw.).

In den Figuren 2, 3 und 4 sind Teilen von Fig.1 entsprechende Teile mit gleichen Bezugszahlen versehen. Diese Teile haben die gleiche Funktion, so daß die diesbezügliche Beschreibung von Fig. 1 auch auf diese anderen Figuren zutrifft.

Bei der Ausführungsform nach Fig. 2 ist eine Schallwellen-Schwingungsvorrichtung 110 an oder in dem Herd 2 ortsfest angeordnet, welche einen Schallwellenerzeuger 112 zur Erzeugung von Schallwellen 114 horizontal durch das Gefäß 8 und/oder einen Schallwellenerzeuger 116 zur Erzeugung von Schallwellen 118 vertikal durch das Gefäß 8 enthält. Die Schallwellen erzeugen sehr kleine Relativbewegungen zwischen dem Gefäß 8 und in ihm enthaltenen Speisen, welche in Richtung und Größe denen entsprechen können, wie sie mit Bezug auf Fig. 1 beschrieben wurden. Hierbei können das Gefäß 8 und/oder die in ihm befindlichen Speisen von den Schallwellen 114 und 118 zur Ausführung der Mikrobewegung angeregt werden. Die Frequenz der Schallwellen liegt vorzugsweise in einem für Menschen nicht hörbaren Bereich.

Fig .3 zeigt einen Herd 2 mit einer elektromagnetischen Schwingungsvorrichtung 210, welche einen Erzeuger 212 zur Erzeugung von elektromagnetischen Schwingungsfeldern 214 aufweist. Die elektromagnetischen Schwingungsfelder regen das Gefäß 8 zu Mikrobewegungen der vorstehend beschriebenen Art an relativ zu einer im Gefäß 8 enthaltenen Speise.

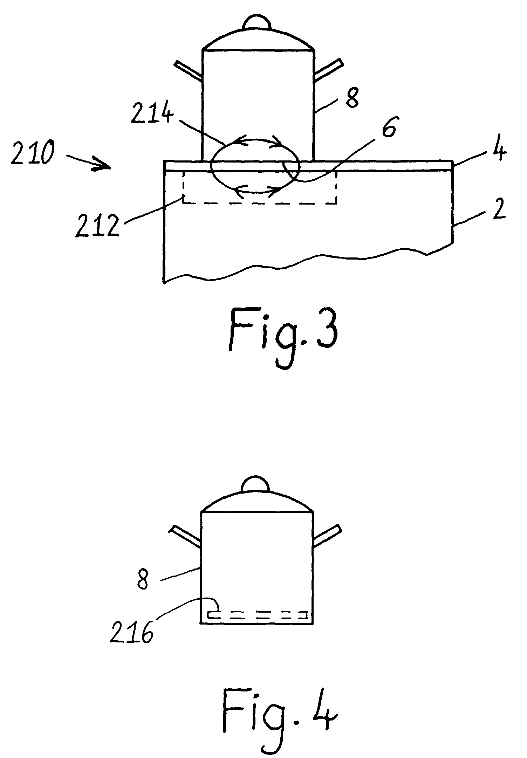

Fig. 4 zeigt schematisch die Möglichkeit, einen in das Gefäß 8 eingelegten Körper 216 durch eine Schallwellen-Schwingungsvorrichtung 110 nach Fig. 2 oder eine elektromagnetische Schwingungsvorrichtung 210 nach Fig. 3 zu Mikroschwingungen relativ zu einer im Gefäß 8 enthaltenen Speise anzuregen, anstelle das Gefäß 8 zu Mikroschwingungen anzuregen.

## Patentansprüche

1. Haushaltgerät mit einer Vorrichtung zur Erzeugung von Relativbewegungen zwischen einem Gefäß zum Kochen oder Braten und darin befindlichen Speisen,
**dadurch gekennzeichnet,**
daß die Vorrichtung (10; 110; 210) zur Erzeugung von Mikrobewegungen zwischen dem Gefäß (8) und der darin befindlichen Speise relativ zueinander zur Reduzierung der Gefahr eines Anbrennens der Speise im Gefäß ausgebildet ist.

2. Haushaltgerät nach Anspruch 1,
**dadurch gekennzeichnet,**
daß die Vorrichtung (10; 110; 210) derart ausgebildet ist, daß mit ihr Mikrobewegungen in Form von Schwingungen erzeugbar sind.

3. Haushaltgerät nach einem der vorhergehenden Ansprüche,
**dadurch gekennzeichnet,**
daß die Vorrichtung (10; 110; 210) derart ausgebildet ist, daß durch sie Mikrobewegungen mit einer Häufigkeit von mindestens einer Bewegung pro Sekunde ausführbar sind.

4. Haushaltgerät nach einem der vorhergehenden Ansprüche,
**dadurch gekennzeichnet,**
daß die Mikrobewegungen des Gefäßes relativ zu der in ihr befindlichen Speise maximal 1mm oder kleiner sind.

5. Haushaltgerät nach einem der Ansprüche 2 bis 4,
**dadurch gekennzeichnet,**
daß die Vorrichtung (10) einen elektrischen Oszillator (14) enthält, welcher mit dem Gefäß (8) mechanische verbindbar oder verbunden ist.

6. Haushaltgerät nach einem der Ansprüche 2 bis 4,
**dadurch gekennzeichnet,**
daß die Vorrichtung (110) mindestens einen Schallerzeuger (112, 116) zur Erzeugung von Schallwellen in einem außerhalb des menschlichen Hörbereiches liegenden Frequenzbereich aufweist, welche zur Erzeugung der Mikrobewegungen in das Gefäß und/oder in die darin befindliche Speise gerichtet sind.

7. Haushaltgerät nach einem der Ansprüche 2 bis 4,
**dadurch gekennzeichnet,**
daß die Vorrichtung (210) einen Erzeuger (212) zur Erzeugung von elektromagnetischen Schwingungsfeldern (214) aufweist, welche in das Gefäß und/oder in die darin befindliche Speise gerichtet sind zur Erzeugung der relativen Mikrobewegungen zwischen der Speise und dem Gefäß.

8. Haushaltgerät nach einem der vorhergehenden Ansprüche,
**dadurch gekennzeichnet,**
daß in dem Gefäß (8) mindestens ein Einsatzkörper (216) relativ zu ihm bewegbar angeordnet ist, und daß der Einsatzkörper von der außerhalb des Gefäßes (8) angeordneten Vorrichtung (110; 210) durch Schallwellen zu den Mikrobewegungen anregbar ist, so daß der Einsatzkörper zusammen mit der im Gefäß befindlichen Speise relativ zu dem Gefäß die Mikrobewegungen ausführt.

9. Haushaltgerät nach einem der Ansprüche 1 bis 7,
**dadurch gekennzeichnet,**
daß in dem Gefäß (8) mindestens ein Einsatzkörper (216) relativ zu ihm bewegbar angeordnet ist, und daß der Einsatzkörper von der außerhalb des Gefäßes (8) angeordneten Vorrichtung (110; 210) durch ein elektromagnetisches Schwingungsfeld zu den Mikrobewegungen anregbar ist, so daß der Einsatzkörper zusammen mit der im Gefäß befindlichen Speise relativ zu dem Gefäß die Mikrobewegungen ausführt

10. Haushaltgerät nach einem der vorherigen Ansprüche,
**dadurch gekennzeichnet,**
daß es ein Bestandteil einer Kochvorrichtung (2) ist.
